# EUROPÄISCHE PATENTANMELDUNG

(11) **EP 2 942 740 A2**
(43) Veröffentlichungstag der Anmeldung: **11.11.2015**
(21) Anmeldenummer: 15166370.5
(22) Anmeldetag: 05.05.2015
(51) Int. Cl.: G06K 19/077, B27D 5/00

(54) **VERFAHREN ZUM KENNZEICHNEN VON WERKSTÜCKEN**

(30) Priorität: 09.05.2014 DE 102014208746
(71) Anmelder: Homag Holzbearbeitungssysteme GmbH, 72296 Schopfloch (DE)
(72) Erfinder: Compera, Christian, 69250 Schönau (DE)
(74) Vertreter: Hoffmann Eitle

(57) **Zusammenfassung**

Die Erfindung betrifft ein Verfahren zum Kennzeichnen von Werkstücken, die bevorzugt zumindest teilweise aus Holz, Holzwerkstoffen oder dergleichen bestehen, mit den Schritten Aufbringen einer codierbaren Beschichtung, insbesondere Folie, Kante und/oder Klebstoffes, auf eine Oberfläche des Werkstücks, sowie reversible oder irreversible Codierung der Beschichtung durch eine Codiereinheit derart, dass die Codierung durch eine Leseeinheit wieder ausgelesen werden kann und bevorzugt Informationen zu Identifikationsmerkmalen, zu Werkstückmerkmalen wie zum Beispiel Dimension, Farbe und Werkstoff, zu den Rohteilen des Werkstückes, zu der Beschichtung, zum Haftmittel, zum Hersteller, zum Kunden und/oder zum Herstellungsdatum enthält.

## Beschreibung

### Technisches Gebiet

Die vorliegende Erfindung bezieht sich auf ein Verfahren zum Kennzeichnen von Werkstücken, die bevorzugt zumindest teilweise aus Holz, Holzwerkstoffen oder dergleichen bestehen.

### Stand der Technik

Verfahren zum Kennzeichnen von Werkstücken der eingangs genannten Art durch Barcodes, Transponder (RFID) und Mikrochips sind beispielsweise im Bereich der Möbel- und Bauelementindustrie seit langem bekannt.

Die Kennzeichnung dient dabei mehrheitlich der eindeutigen Identifikation des Werkstückes im Produktionsverlauf. Zusätzlich zu einem Identifikationsmerkmal können auch Werkstückmerkmale wie zum Beispiel Dimension, Farbe und Werkstoff auf dem Kennzeichnungsmerkmalträger hinterlegt werden. Durch Assoziierung dieser (Identifikations-)Merkmale mit entsprechenden Routinen im Produktionsprozess kann die Verarbeitung der Werkstücke weitgehend automatisiert erfolgen.

Weiterhin ermöglicht die Kennzeichnung die Rückverfolgung der Herkunft und Prozessroute des Werkstückes. So können bei fehlerhaften Produkten sowohl der Hersteller als auch die betroffene Charge eines Werkstückes einwandfrei identifiziert werden.

Bei einer oberflächlichen Anbringung von Kennzeichnungsmerkmalträgern wie beispielsweise Barcodes an dem Werkstück besteht allerdings die Gefahr, dass diese im weiteren Produktionsverlauf verlustig gehen oder beschädigt werden. Weiterhin müssen die Kennzeichnungsmerkmalträger nach dem Produktionsprozess oftmals entfernt werden, da sie zum Beispiel aus ästhetischen oder produktionstechnischen Gesichtspunkten störend sein können. Daher werden zunehmend Versuche unternommen, die Kennzeichnungsmerkmalträger im Werkstück selbst unterzubringen.

So offenbart EP2230626 ein Verfahren zur Kennzeichnung von Massivplattenwerkstücken durch Anbringen eines RFID-Tags insbesondere in einer zu fertigenden Ausnehmung des Werkstücks, wobei der eingebrachte RFID-Tag mit einer Beschichtung zum Schutz gegen die Umgebung versehen wird.

EP2461275 offenbart ein weiteres Verfahren zur Kennzeichnung plattenförmiger Erzeugnisse mittels eines RFID-Bauteils. Zur Befestigung wird das Bauteil auf, an oder in einem Trägermaterial angeordnet, welches wiederum in eine an der Schmalseite des Werkstückes zu fertigende Ausnehmung eingebracht wird.

Bei einer Integrierung des Kennzeichnungsmerkmalträgers in das Werkstück nach dem Stand der Technik muss allerdings zusätzlicher Aufwand in Form eines weiteren Arbeitsschrittes betrieben werden, da die Ausnehmung für das RFID-Bauteil z.B. durch Fräsen oder Prägen des Werkstückes separat gefertigt werden muss. Zudem kann dieser zusätzliche Arbeitsschritt nachteiligen Einfluss auf die Produkteigenschaften des Werkstückes haben, so zum Beispiel auf die Produktstabilität bei dünnwandigen Werkstücken.

### Darstellung der Erfindung

Es ist daher Aufgabe der vorliegenden Erfindung, ein Verfahren zur Kennzeichnung von Werkstücken zur Verfügung zu stellen, das unter Verringerung des Zeit-, Arbeits- und Kostenaufwands eine dauerhafte Kennzeichnung des Werkstückes erlaubt.

Erfindungsgemäß wird diese Aufgabe durch ein Verfahren mit den Merkmalen von Patentanspruch 1 gelöst. Bevorzugte Ausführungsformen sind in den abhängigen Ansprüchen angegeben.

Das erfindungsgemäße Verfahren zum Kennzeichnen von Werkstücken umfasst das Aufbringen einer codierbaren Beschichtung auf eine Oberfläche des Werkstücks und das reversible oder irreversible Codieren der Beschichtung durch eine Codiereinheit derart, dass die Codierung durch eine Leseeinheit wieder ausgelesen werden kann. Hierbei bestehen die Werkstücke bevorzugt zumindest teilweise aus Holz, Holzwerkstoffen oder dergleichen, und unter einer Beschichtung sind insbesondere auch Kanten, Decklagen wie zum Beispiel Folien, und/oder Klebstoffe zu verstehen. Weiterhin dient die Kennzeichnung bevorzugt als Identifikationsmerkmal der Werkstücke. Darüber hinaus kann die Kennzeichnung auch, aber nicht ausschließlich, Informationen zu Werkstückmerkmalen (wie zum Beispiel Dimension, Farbe und Werkstoff), zu den Rohteilen des Werkstückes, zu der Beschichtung, zum Haftmittel, zum Hersteller, zum Kunden und zum Herstellungsdatum enthalten. Durch zumindest teilweise Integration der Kennzeichnung des Werkstückes in den Beschichtungsvorgang kann auf weitere separate Prozessschritte, wie zum Beispiel das Fertigen einer Ausnehmung für die Unterbringung eines RFID-Tags, verzichtet werden, so dass das Verfahren zeit- und kostensparend durchgeführt werden kann. Des Weiteren ist die Kennzeichnung in der Beschichtung vor Umwelteinflüssen weitestgehend geschützt, und erlaubt damit eine Identifikation über den gesamten Produktlebenszyklus des Werkstückes.

Bevorzugt enthält die codierbare Beschichtung gemäß der Erfindung Partikel, die mittels einer Energiequelle ausgerichtet werden können. Die Nutzung von Kleinstpartikeln, insbesondere Mikro- und/oder Nanopartikeln, zur Codierung der Beschichtung ermöglicht dabei eine große Informationsdichte, denn mit der Anzahl der Partikel wächst, unabhängig von der Art der Datenspeicherung, auch die potentielle Speicherdichte in der Beschichtung. Die Partikel haben dabei bevorzugt eine Größe von 1 nm bis 500 µm und weisen bevorzugt eine kugelförmige, plattenförmige oder längliche Form auf. Die Partikelzugabe ist dabei hinsichtlich der Codierung nicht zweckgebunden, vielmehr können auch die Partikel auch vorteilhafte funktionale Sekundärattribute, beispielsweise Verbesserung der Adhäsionskraft der Beschichtung, aufweisen.

In einer weiteren Ausgestaltung des erfindungsgemäßen Verfahrens sind die Partikel zumindest teilweise magnetisiert oder magnetisierbar. Die Orientierung des magnetischen Feldes der bevorzugt ferromagnetischen Partikel und die Beeinflussung derselben stellen eine vorteilhafte Möglichkeit dar, die Beschichtung zu codieren.

Besonders bevorzugt ist das erfindungsgemäße Verfahren wonach die codierbare Beschichtung durch Bedrucken der Beschichtung codiert wird. Dabei ist es vorteilhaft, insbesondere die Innenseite der Beschichtung und/oder ein in die Beschichtung einzubringendes Substrat zu bedrucken, da die Codierung damit geschützt unter der Oberfläche des Werkstückes angebracht wird. Das Druckverfahren ermöglicht dabei eine außerordentlich ortsdiskrete Applikation der Codierung.

Weiterhin enthält die Drucktinte gemäß einer bevorzugten Ausführungsform elektrisch leitende Komponenten, so dass beispielsweise Antennen, Spulen oder Schaltkreise direkt in die Beschichtung gedruckt werden können.

In einer vorteilhaften Ausgestaltung werden die magnetisierten oder magnetisierbaren Komponenten der codierbaren Beschichtung durch die Codiereinheit mittels Applikation eines äußeren Magnetfeldes, bevorzugt durch einen Magnetkopf, magnetisiert und/oder ausgerichtet. Durch die Relativbewegung zwischen Beschichtung und Codiereinheit werden lokal unterschiedliche Ausrichtungen erzeugt. Die Gesamtheit der lokal verschiedenen magnetischen Orientierungen in der Beschichtung dient dabei als Codierung.

Besonders bevorzugt ist das erfindungsgemäße Verfahren wonach die codierbare Beschichtung mit einer Mikrostruktur, bevorzugt Oberflächenvertiefungen, versehen wird. Die Mikrostruktur dient dabei als Kennzeichnungsmerkmalträger. Vorzugsweise ist die Mikrostruktur mit dem bloßen Augen nicht zu erkennen, da die Vertiefungen der Mikrostruktur entweder von geringer Tiefe und Durchmesser sind oder diese sich nicht von der Oberflächenstruktur des Werkstücks unterscheiden lassen.

Weiterhin bevorzugt ist hierbei das Einbringen der Mikrostruktur in die codierbare Beschichtung mittels einer Energiequelle, wobei die Energiequelle bevorzugt ausgewählt ist aus einer Strahlungsquelle aus dem elektromagnetischen Spektrum, einer Ultraschallquelle und einer Heißgasquelle, da hierdurch eine kontaktlose und präzise Prozessführung ermöglicht wird. Die Strahlungsquelle aus dem elektromagnetischen Spektrum umfasst vorzugsweise mindestens einen Emittenten für die Spektralbereiche IR, UV, Mikrowelle und/oder sichtbares Licht wie zum Beispiel Laser oder Leuchtdiode, Besonders bevorzugt ist die Nutzung eines Lasers, da durch die geringe Divergenz des Laserstrahls eine hohe Ortsauflösung bei hoher Intensität ermöglicht wird.

In einer weiteren Form des erfindungsgemäßen Verfahrens wird in die Beschichtung ein Transponder, vorzugsweise passiv, eingebracht. Da in dieser Ausführungsform die Orientierung und/oder Lage von Kennzeichnungsmerkmalträger und Schreib- und/oder Leseeinheit relativ zueinander weitgehend unkritisch ist, kommt das Verfahren bevorzugt zum Tragen, wenn letztere im Prozess nicht in vordefinierten Grenzen eingehalten werden können.

Weiterhin wird der Transponder in einer Variation des erfindungsgemäßen Verfahrens in Form eines RFID-Chips in die Beschichtung eingebracht. Aufgrund der weiten Verbreitung von RFID-Chips kann hier beim Auslesen auf verfügbare standardisierte Prozesse zurückgegriffen werden.

Besonders bevorzugt ist das Einbringen lumineszierender Komponenten in die codierbare Beschichtung. Vorteilhaft sind hierbei insbesondere Lumineszenzsysteme, deren Anregungsquellen in der Arbeitsumgebung des finalen Werkstückproduktes nicht verbreitet sind. Die Kennzeichung ist damit nur nach gezielter Anregung des Lumineszenzsystems detektierbar, eine versehentliche Anregung der lumineszierenden Komponenten kann weitgehend ausgeschlossen werden.

In einer weiteren bevorzugten Ausführungsform werden lokal unterschiedliche lumineszierender Komponenten in die codierbare Beschichtung eingebracht. So kann beispielsweise je nach Anregungsart eine unterschiedliche Werkstückcodierung abgefragt werden, beispielsweise Produktionsparameter in unterschiedlichen Prozessschritten.

In einer vorteilhaften Ausgestaltung werden die lumineszierenden Komponenten angeregt. Die optische Strahlung beim Übergang vom angeregten Zustand in den Grundzustand wird dabei detektiert und, beispielsweise durch digitale Bildverarbeitung, ausgewertet. Das resultierende eindeutige Muster ermöglicht damit ein Auslesen der Codierung des Werkstücks.

Bevorzugt wird weiterhin, dass die Codierung im flüssigen oder fließfähigen Zustand der Beschichtung erfolgt, da hierdurch der Codierungsvorgang erleichtert oder erst ermöglicht werden kann.

Weiterhin wird in einer bevorzugten Ausgestaltung des erfindungsgemäßen Verfahrens die Codierung durch Übergang der Beschichtung, oder eines Teiles derselben wie zum Beispiel eines Haftmittels, vom flüssigen oder fließfähigen Zustand in den Feststoffzustand fixiert. Hierdurch kann eine permanente Codierung des Werkstückes gewährleistet werden.

In einer weiteren bevorzugten Ausführungsform wird die codierte Beschichtung durch elektrische und/oder magnetische und/oder elektromagnetische Felder ausgelesen. Da das Auslesen damit kontaktlos ausgeführt werden kann, wird die Prozessführung diesbezüglich vereinfacht.

Besonders bevorzugt ist dabei das Auslesen der lokal unterschiedlichen Ausrichtungen der magnetisierten oder magnetisierbaren Komponenten durch eine Leseeinheit, vorzugsweise einen Magnetkopf. In dieser Ausführungsform kann auch die Orientierung schwacher Magnetfelder akkurat ausgelesen werden.

Weiterhin wird die Mikrostruktur der codierbaren Beschichtung bevorzugt mittels optischer Abtastung, besonders bevorzugt mittels eines Lasers, ausgelesen. Die optische Abtastung, ermöglicht dabei eine schnelle, kontaktlose und präzise Erfassung der Oberflächenstruktur des Werkstücks. Mittels digitaler Bildverarbeitung kann nachfolgend die eingebrachte Mikrostruktur identifiziert und interpretiert werden.

Gemäß einer weiteren Ausführungsform des erfindungsgemäßen Verfahrens wird die codierbare Beschichtung durch Schall, vorzugsweise Ultraschall, ausgelesen. Bewusst eingebrachte Ungänzen, wie zum Beispiel Partikel oder auch ein gedrucktes Muster können so detektiert und entsprechend ausgelesen werden. Besonders vorteilhaft ist hierbei, dass die Codierung auch unterhalb der Oberfläche platziert werden kann.

Schließlich wird in einer bevorzugten Variante des erfindungsgemäßen Verfahrens eine reflektierende Schicht in die codierbare Beschichtung integriert. Hierdurch kann insbesondere die Trennschärfe beim Auslesen der Codierung, beispielsweise durch Ultraschall, erhöht werden.

### Kurze Beschreibung der Zeichnungen

- Fig. 1: zeigt eine schematische Draufsicht eines Ausschnitts einer Kennzeichnungsvorrichtung zur Durchführung des erfindungsgemäßen Verfahrens gemäß einem ersten Ausführungsbeispiel und
- Fig. 2: zeigt eine schematische Draufsicht eines Ausschnitts einer Kennzeichnungsvorrichtung zur Durchführung des erfindungsgemäßen Verfahrens gemäß einem zweiten Ausführungsbeispiel

### Ausführliche Beschreibung bevorzugter Ausführungsformen

Bevorzugte Ausführungsformen zur Anwendung der vorliegenden Erfindung werden nachfolgend ausführlich unter Bezugnahme auf die begleitenden Zeichnungen beschrieben.

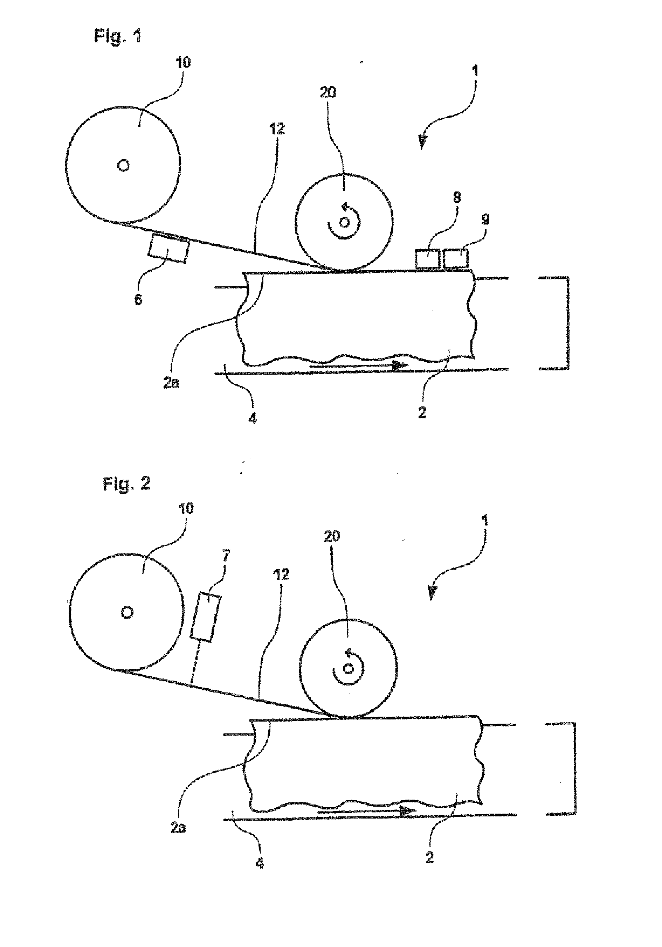

Eine Kennzeichungsvorrichtung 1 zum Kennzeichnen von Werkstücken 2 bei der Beschichtung als bevorzugte Ausführungsform der vorliegenden Erfindung ist in Figur 1 schematisch in einer Draufsicht dargestellt. Die Kennzeichungsvorrichtung 1 dient in der vorliegenden ersten Ausführungsform zum Beschichten von plattenförmigen Werkstücken 2, die bevorzugt zumindest teilweise aus Holz, Holzwerkstoffen oder dergleichen bestehen, wie sie beispielsweise im Bereich der Möbel- und Bauelementeindustrie heute zum Einsatz kommen. Dabei kann es sich um unterschiedlichste Werkstücke wie beispielsweise Massivholz- oder Spanplatten, Leichtbauplatten, Sandwichplatten, Fußbodenleisten, Profilen zur Profilummantelung etc. handeln.

Es ist jedoch zu beachten, dass die vorliegende Erfindung nicht auf derartige Werkstücke beschränkt ist.

Die Kennzeichungsvorrichtung 1 umfasst zunächst eine Fördereinrichtung 4, die in der vorliegenden Ausführungsform als Durchlauffördereinrichtung ausgestaltet ist, beispielsweise in Form eines Rollenförderers, Riemenförderers oder dergleichen. Dabei dient die Fördereinrichtung 4 dazu, die Werkstücke 2 in einer Durchlaufrichtung (von links nach rechts in Figur 1) zu fördern.

Neben der Fördereinrichtung 4 ist eine Zuführeinrichtung 10 zum Zuführen eines Beschichtungsmaterials 12 angeordnet, wobei es sich bei dem Beschichtungsmaterial beispielsweise um ein Kantenmaterial für eine Schmalfläche des Werkstücks, aber auch um ein Deckmaterial für eine Breitfläche oder jede andere beliebige Oberfläche des Werkstücks 2 handeln kann. Die Zuführeinrichtung 10 enthält einen Vorrat an Beschichtungsmaterial 12, das aus unterschiedlichsten Materialien bestehen kann, wie beispielsweise Kunststoff, Furnier, Papier, Pappe, Metall, etc. und vielfältigen Kombinationen hiervon. Dabei kann das Beschichtungsmaterial beispielsweise in Rollenform (ggf. in einer Kassette), aber auch in Form von Einzelabschnitten vorgesehen sein.

Die Zuführeinrichtung 10 führt das Beschichtungsmaterial 12 einer Andrückeinrichtung 20 zum Andrücken des Beschichtungsmaterials 12 an eine Oberfläche 2a des Werkstücks 2 zu. Die Oberfläche 2a ist mit einem Haftmittel im fließfähigen Zustand zur dauerhaften Verbindung von Oberfläche 2a und Beschichtungsmaterial 12 versehen. Bei der Andrückeinrichtung 20 handelt es sich in der vorliegenden Ausführungsform um eine Andrückrolle (anstelle einer Andrückrolle können beispielsweise auch Bänder, Schuhe oder dergleichen zum Einsatz kommen), die auf der Oberfläche 2a des Werkstücks 2 abrollt und auf diese Weise das Beschichtungsmaterial 12 an die Oberfläche 2a des Werkstücks 2 andrückt.

Eine Druckeinrichtung 6 bedruckt das Beschichtungsmaterial 12 auf der der Werkstoffoberfläche 2a zugewandten Seite. Die aufgetragene Drucksubstanz enthält in einer bevorzugten Ausführungsform hartmagnetische Partikel und wird im Ausführungsbeispiel in Form einer definierten Punkt- oder Strichmatrix auf die Beschichtung appliziert.

Nach dem Andrücken des codierten Beschichtungsmaterials 12 an die Oberfläche 2a werden die hartmagnetischen Partikel in der Beschichtung durch eine Codiereinrichtung 8, im Ausführungsbeispiel als Magnetkopf ausgeführt, abschnittsweise derart ausgerichtet, dass die Orientierung des äußeren Magnetfeldes des Magnetkopfes mit der Orientierung der hartmagnetischen Partikel übereinstimmt. Zu diesem Zeitpunkt befindet sich das die Partikel umgebende Haftmittel noch im fließfähigen Zustand, um die Ausrichtung der Partikel zu ermöglichen. Nach dem Ausrichten durch den Magnetkopf 8 wird das Haftmittel durch eine hinter dem Magnetkopf montierte Fixiereinrichtung 9 thermisch ausgehärtet. Die Partikel sind damit in der Beschichtung fixiert und die sequenzweise Orientierung des äußeren Magnetfeldes bleibt dauerhaft in der Beschichtung erhalten. Diese kann durch einen Magnetlesekopf, nicht in der Zeichnung veranschaulicht, jederzeit wieder ausgelesen werden. Die Sequenzierung der magnetischen Orientierung kann dabei nach unterschiedlichen Codierungsverfahren erfolgen.
Das Verfahren in der dargelegten Ausführungsform erlaubt daher mit einfachen Mitteln das betriebssichere Kennzeichnen von Werkstücken.

Eine zweite bevorzugte Ausführungsform der Beschichtungsvorrichtung 1 zur Ausführung des erfindungsgemäßen Verfahrens ist in Figur 2 schematisch in einer Draufsicht dargestellt. Diese unterscheidet sich von der in Figur 1 gezeigten ersten Ausführungsform primär dadurch, dass die Druckeinrichtung 6, die Codiereinrichtung 8 und die Fixiereinrichtung 9 wegfallen. Stattdessen findet sich zwischen Andrückeinrichtung 20 und Zuführeinrichtung 10 eine Strahlungsquelle 7. Im vorliegenden Ausführungsbeispiel ist die Strahlungsquelle 7 als Laser ausgeführt.

Die Strahlungsquelle 7 ist auf die dem Werkstück 2 abgewandte Seite der Beschichtung 12 gerichtet. Bei Auftreffen des Strahls auf die Beschichtung 12 erfolgt ein Energieeintrag, der zum lokalen Aufschmelzen und/oder Verdampfen der Beschichtung beführt. Die Nutzung eines Lasers als Strahlungsquelle ermöglicht dabei einerseits eine präzise Steuerung des Energieeintrags und der daraus resultierenden lokalen Abtragung des Beschichtungsmaterials 12 und andererseits eine hohe Ortsauflösung.

Die Strahlungsquelle 7 ist mit einer Steuereinrichtung versehen, bevorzugt in Form einer Spiegelkonstruktion mit mindestens einem Kippwinkel, die den Strahl derart steuert, dass er senkrecht zur Längsrichtung des Beschichtungsmaterials 12 zu bewegen ist. Im Zusammenhang mit dem Verfahren des Beschichtungsmaterials parallel zur Längsrichtung lässt sich damit die gesamte Oberfläche des Beschichtungsmaterials durch die Strahlungsquelle 7 erfassen. Durch wiederholtes lokales Abschmelzen/Verdampfen wird die Oberflächenstruktur mit einer Mikrostruktur versehen, die ein codiertes Vertiefungsprofil darstellt. Das Vertiefungsprofil kann dabei zum Beispiel als Punktmatrix ausgeführt sein.

Die Mikrostruktur ist dabei mit bloßem Auge nicht zu erkennen, da die Vertiefungen von geringer Tiefe und kleinem Durchmesser sind und sich von der Oberflächenstruktur der Beschichtung daher mit bloßem Auge nicht unterscheiden lassen. Alternativ werden die Oberflächenstruktur der Beschichtung und das Vertiefungsprofil der Codierung derart aufeinander abgestimmt, dass das Vertiefungsprofil zwar sichtbar ist, aber nicht als Kennzeichnung sondern nur als Teil der Oberflächenstruktur wahrgenommen wird.

Zur Vermeidung von Lese- und/oder Schreibfehlern, zum Beispiel durch oberflächliche Beschädigung der Beschichtung, kann Redundanz durch fortlaufende oder an bestimmten Positionen des Beschichtungsmaterials wiederholte Codierung der Beschichtung erzielt werden.

Das Auslesen der Kennzeichnung wird durch eine nicht in der Figur gezeigten Leseeinheit realisiert. Hierzu wird das Beschichtungsmaterial mit einer Lichtquelle beleuchtet. Das Licht wird von der der Beschichtung 12 auf einen Sensor reflektiert und mittels digitaler Bildverarbeitung ausgewertet. Das resultierende eindeutige Muster ermöglicht damit eine Identifikation des Werkstücks 2.

### Bezugszeichenliste

- 1: Kennzeichnungsmaschine
- 2: Werkstück
- 2a: Oberfläche des Werkstücks
- 4: Fördereinrichtung
- 6: Druckeinrichtung
- 7: Strahlungsquelle
- 8: Codiereinrichtung
- 9: Fixiereinrichtung
- 10: Zuführeinrichtung
- 12: Beschichtungsmaterial
- 20: Andrückeinrichtung

## Patentansprüche

1. Verfahren zum Kennzeichnen von Werkstücken, die bevorzugt zumindest teilweise aus Holz, Holzwerkstoffen oder dergleichen bestehen, mit den Schritten:
Aufbringen einer codierbaren Beschichtung, insbesondere Folie, Kante und/oder Klebstoffes, auf eine Oberfläche des Werkstücks,
reversible oder irreversible Codierung der Beschichtung durch eine Codiereinheit derart, dass die Codierung durch eine Leseeinheit wieder ausgelesen werden kann und bevorzugt Informationen zu Identifikationsmerkmalen, zu Werkstückmerkmalen wie zum Beispiel Dimension, Farbe und Werkstoff, zu den Rohteilen des Werkstückes, zu der Beschichtung, zum Haftmittel, zum Hersteller, zum Kunden und/oder zum Herstellungsdatum enthält.

2. Verfahren nach Anspruch 1,
**dadurch gekennzeichnet,**
**dass** die codierbare Beschichtung Partikel, insbesondere Mikro- und/oder Nanopartikel enthält, die mittels einer Energiequelle ausgerichtet werden können, wobei die Partikel bevorzugt zumindest teilweise magnetisiert oder magnetisierbar, insbesondere ferromagnetisch sind.

3. Verfahren nach einem der vorhergehenden Ansprüche,
**dadurch gekennzeichnet,**
**dass** die codierbare Beschichtung durch Bedrucken der Beschichtung, insbesondere auf deren Innenseite, und/oder eines in die Beschichtung einzubringenden Substrats codiert wird, wobei die Drucktinte bevorzugt elektrisch leitende Komponenten enthält.

4. Verfahren nach Anspruch 2 bis 4,
**dadurch gekennzeichnet,**
**dass** die Codiereinheit durch Applikation eines äußeren Magnetfeldes, bevorzugt durch einen Magnetkopf, die magnetisierten oder magnetisierbaren Komponenten der codierbaren Beschichtung magnetisiert und/oder ausrichtet, wobei bevorzugt lokal unterschiedliche Ausrichtungen erzeugt werden können.

5. Verfahren nach einem der vorhergehenden Ansprüche,
**dadurch gekennzeichnet,**
**dass** die codierbare Beschichtung mit einer Mikrostruktur, bevorzugt Oberflächenvertiefungen, versehen wird.

6. Verfahren nach Anspruch 5,
**dadurch gekennzeichnet,**
**dass** die Mikrostruktur mittels einer Energiequelle in die codierbare Beschichtung eingebracht wird, wobei die Energiequelle vorzugsweise ausgewählt ist aus einer Strahlungsquelle aus dem elektromagnetischen Spektrum, einer Ultraschallquelle und einer Heißgasquelle.

7. Verfahren nach einem der vorhergehenden Ansprüche,
**dadurch gekennzeichnet,**
**dass** zwecks Codierung ein Transponder, vorzugsweise passiv, besonders bevorzugt in Form eines RFID-Chips, in die Beschichtung eingebracht wird.

8. Verfahren nach einem der vorhergehenden Ansprüche,
**dadurch gekennzeichnet,**
**dass** lumineszierende Komponenten in die codierbare Beschichtung eingebracht werden, wobei bevorzugt lokal unterschiedliche lumineszierende Komponenten in die codierbare Beschichtung eingebracht werden.

9. Verfahren nach Anspruch 8,
**dadurch gekennzeichnet,**
**dass** die lumineszierenden Komponenten angeregt werden und der Übergang vom angeregten Zustand in den Grundzustand detektiert sowie, beispielsweise durch digitale Bildverarbeitung, ausgewertet wird.

10. Verfahren nach einem der vorhergehenden Ansprüche,
**dadurch gekennzeichnet,**
**dass** die Codierung im flüssigen oder fließfähigen Zustand der Beschichtung erfolgt, wobei die Codierung bevorzugt durch Übergang der Beschichtung vom flüssigen oder fließfähigen Zustand in den Feststoffzustand fixiert wird.

11. Verfahren nach einem der vorhergehenden Ansprüche,
**dadurch gekennzeichnet,**
**dass** die codierte Beschichtung durch elektrische und/oder magnetische und/oder elektromagnetische Felder ausgelesen wird.

12. Verfahren nach einem der vorhergehenden Ansprüche,
**dadurch gekennzeichnet,**
**dass** die lokal unterschiedlichen Ausrichtungen der magnetisierten oder magnetisierbaren Komponenten durch eine Leseeinheit, vorzugsweise einen Magnetkopf, ausgelesen werden können.

13. Verfahren nach einem der Ansprüche 5 bis 6,
**dadurch gekennzeichnet,**
**dass** die Mikrostruktur der codierbaren Beschichtung mittels optischer Abtastung, bevorzugt mittels eines Lasers, ausgelesen wird.

14. Verfahren nach einem der vorhergehenden Ansprüche,
**dadurch gekennzeichnet,**
**dass** die codierbare Beschichtung durch Schall, vorzugsweise Ultraschall, ausgelesen wird.

15. Verfahren nach einem der vorhergehenden Ansprüche,
**dadurch gekennzeichnet,**
**dass** eine reflektierende Schicht in die codierbare Beschichtung integriert wird.
